Europäisches Patentamt

European Patent Office

Office européen des brevets

(19)

(11) Veröffentlichungsnummer: **0 483 541 A2**

## (12) EUROPÄISCHE PATENTANMELDUNG

(21) Anmeldenummer: **91116936.5**

(22) Anmeldetag: **04.10.91**

(51) Int. Cl.5: **B29C 45/20**, B29C 45/62

(30) Priorität: **02.11.90 DE 4034784**
**23.02.91 DE 4105727**

(43) Veröffentlichungstag der Anmeldung:
**06.05.92 Patentblatt 92/19**

(84) Benannte Vertragsstaaten:
**AT CH DE ES FR GB IT LI NL**

(71) Anmelder: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr.**
**Patentanwälte Dr. Mayer & Frank Westliche 24**
**W-7530 Pforzheim(DE)**

(54) **Plastifiziereinrichtung an einer Kunststoff-Spritzgiessmaschine.**

(57) Im Plastifizierzylinder (10) wird der plastifizierte Kunststoff in einen Raum vor die rotierende Förderschnecke transportiert und durch einen axialen Hub in die Spritzgießform eingespritzt. Bei diesem Hub wird eine Rückstromsperre (13) wirksam, die einen Hochdruckraum (H) gegenüber einem die Förderschnecke (12) enthaltenden Niederdruckraum (N) abschließt. Der Plastifizierzylinder ist aus einem den Hochdruckraum (H) und die Rückstromsperre (13) stets und vollständig einschließenden Zylinderkopf (10a) und einem den Niederdruckraum (N) und die Förderschnecke (12) umschließenden Zylinderteil (10b) zusammengefügt. Bei einer solchen Ausbildung ist eine in den Hochdruckraum mündende Fuge auch bei maximaler rückwärtiger Ausgangslage der Förderschnecke (12) prinzipiell vermieden. Insofern entfallen die bisher bestehenden Probleme einer Abdichtung des Hochdruckraumes.

EP 0 483 541 A2

Die Erfindung betrifft eine Plastifiziereinrichtung an einer Kunststoff-Spritzgießmaschine mit einem Plastifizierzylinder, dessen innere Mantelfläche einen zylindrischen Plastifizierraum begrenzt, welcher über einen kegelförmigen Abschnitt in den zentralen Einspritzkanal mündet, mit einer rotierbaren Förderschnecke im Plastifizierraum, welche den plastifizierten Kunststoff in einen Abschnitt des Plastifizierraums vor die zurückweichende Förderschnecke transportiert und durch einen axialen Einspritzhub in die Spritzgießform einspritzt.

Unter 'Hochdruckraum' im obigen Sinne wird der während der Einspritzung des Kunststoffes in die Spritzgießform vor der Rückstromsperre befindliche Raum verstanden, der gegenüber dem Niederdruckraum hermetisch abgeschlossen ist. Das maximale Volumen dieses Hochdruckraumes ist durch eine größtmögliche rückwärtige Lage der Förderschnecke bestimmt. Diese wird im folgenden als' maximale rückwärtige Ausgangslage' bezeichnet. Von der maximalen rückwärtigen Ausgangslage ist die aktuelle rückwärtige Ausgangslage der Förderschnecke zu unterscheiden, die durch das jeweilige für ein bestimmtes Spritzteil erforderliche Quantum an Kunststoff bestimmt ist. Die 'aktuelle rückwärtige Ausgangslage' der Förderschnecke ist daher bei unterschiedlich großen Spritzteilen jeweils eine andere, weil in jedem Spritzzyklus vor der Förderschnecke nur so viel Kunststoff angesammelt wird, als für den zu fertigenden Spritzteil gerade erforderlich ist.

Die bislang üblichen, aus Hohlzylindern gefertigten Plastifizierzylinder sind einstückig ausgebildet (vergl. hierzu beispielsweise die DE 37 44 519 C1). Sie sind stirnseitig durch einen Düsenkörper abgeschlossen, der über radiale und axiale Dichtflächen an entsprechenden Dichtflächen des Plastifizierzylinders im Paßsitz anliegt. Dabei grenzt die Fuge zwischen Düsenkörper und Plastifizierzylinder entlang der inneren Mantelfläche des Plastifizierzylinders an den Hochdruckraum an. Die Länge der beim Einspritzen des Kunststoffmaterials dem Druck im Hochdruckraum exponierten, auf einer Kreislinie verlaufenden Fugenmündung ist daher durch die lichte Weite des Hochdruckraumes bestimmt und somit relativ groß. Andererseits können während des Einspritzhubes im Hochdruckraum Drücke bis zu 2.500 bar und höher auftreten, welche die Fuge in ganzer Länge beaufschlagen. Um eine ausreichende Dichtung zwischen Düsenkörper und Zylinder zu gewährleisten, ist es daher erforderlich, daß der Düsenkörper mit extrem großem Anpreßdruck an den Dichtflächen des Zylinders axial anliegt. Dies setzt wiederum einen relativ großen Montageaufwand voraus, weil der Anpreßdruck in aller Regel von der axialen Bewegungskomponente eines Gewindeelementes abgeleitet ist. Beim Aufbau des Anpreßdruckes sind daher sehr große Drehmomente am Gewindeelement erforderlich, die nur unter dem Einsatz erheblicher physischer Kräfte und/oder mit Hilfe von verhältnismäßig großen Werkzeugen erreichbar sind. Dabei ist zu berücksichtigen, daß ein Düsenwechsel vom Kunden selbst oder vom Kundendienst-Personal des Herstellerbetriebes im Betrieb des Kunden vorzunehmen ist. Besonders problematisch ist daher ein Düsenwechsel, wenn nur fachlich wenig qualifiziertes Personal ohne sachgerechtes Werkzeug zur Verfügung steht, was insbesondere in industriell wenig entwickelten Ländern der Fall sein kann. Hinzu kommt, daß neuerdings immer mehr spritztechnisch problematische Stoffe und Stoffmischungen zur Verarbeitung kommen, um bestimmten Ansprüchen an die Eigenschaften der Spritzteile zu genügen. Unter den genannten Stoffen und Stoffmischungen können sich auch solche befinden, die unter dem extremen Druck im Hochdruckraum Gase entbinden, sofern eine Möglichkeit des Entweichens dieser Gase durch die vorgenannte Fuge besteht.

Im allgemeinen und insbesondere auch bei bekannten Plastifizierzylindern nach der DE 37 44 519 C1, ist ein relativ langer Düsenkörper und demzufolge ein entsprechend langer Einspritzkanal erforderlich. Denn ein beträchtlicher axialer Abschnitt des Düsenkörpers wird für dessen verzahnte Verbindung zum Zylinder und ein weiterer axialer Abschnitt für die Anbringung von Halteorganen für ein Thermoelement bzw. für eine Düsennadel 'verbraucht'. Andererseits hat ein relativ langer Einspritzkanal einen entsprechend hohen Druckverlust beim Einspritzen des Kunststoffmaterials zur Folge.

Der Erfindung liegt die Aufgabe zugrunde, einen Plastifizierzylinder der eingangs genannten Gattung derart weiterzubilden, daß die oben aufgezeigten Probleme hinsichtlich der Montage und des Wechsels einer Düse und hinsichtlich der Abdichtung des Hochdruckraumes weitgehend entfallen.

Diese Aufgabe wird erfindungsgemäß dadurch gelöst,daß der Plastifizierzylinder aus einem den Hochdruckraum und die Rückstromsperre auch bei maximaler rückwärtiger Ausgangslage der Förderschnecke stets und vollständig einschließenden Zylinderkopf und einem den Niederdruckraum und die Förderschnecke umschließenden Zylinderteil leicht lösbar zusammengefügt ist und die Fuge entlang einer Kreislinie an der inneren Mantelfläche des Plastifizierraums in den Niederdruckraum mündet, wobei feinbearbeitete Stirnflächen von Zylinderkopf und Zylinderteil mittels wenigstens einer Preßeinrichtung (Muffe, Gewindebolzen) axial aufeinander preßbar sind.

Bei dem erfindungsgemäßen Plastifizierzylinder ist eine in den Hochdruckraum mündende Fuge dadurch prinzipiell vermieden, daß der Hochdruckraum auch bei maximaler rückwärtiger Ausgangslage der Förderschnecke von einem Zylinderkopf vollständig eingeschlossen ist und die zwischen dem Zylinderkopf und dem Zylinderteil gebildete Fuge in den Niederdruckraum mündet, in welchem im Vergleich zum Hochdruckraum um das Vielfache geringere Drücke z.B. im Bereich von 250 bar herrschen können.

Sofern beim erfindungsgemäßen Plastifizierzylinder ein - höher legierter - gesonderter Düsenkörper vorgesehen ist, verläuft dessen Fuge im axialen Bereich des Einspritzkanals. Beim Einspritzen des Kunststoffmaterials wird daher lediglich eine kreisförmige Fugenmündung vom Hochdruck beaufschlagt, die um ein Vielfaches kürzer ist als die vom Hochdruckraum beaufschlagte Fuge bei den bisher üblichen Plastifizierzylindern. Aus diesem Grunde ist es auch möglich, auf die bisher notwendige Verzahnung zwischen Düsenkörper und Plastifizierzylinder mit relativ großen axialen und radialen Dichtflächen zu verzichten. Es genügt, den Düsenkörper über eine Dichtfläche, die in einer quer zur Spritzachse stehenden Ebene liegt, also ohne oder ohne nennenswerte Verzahnung mit dem Zylinderkopf zu verbinden. Dadurch kann wiederum der Düsenkörper mit einer extrem geringen axialen Länge ausgebildet werden, was zu einem extrem kurzen Einspritzkanal führt.

Die Erfindung wird durch eine an sich bekannte Plastifiziereinrichtung (US-PS 4,842,507) nicht berührt. Denn bei dieser Plastifiziereinrichtung ist zwar auch ein zweiteiliger Plastifizierzylinder vorgesehen. Dies jedoch derart, daß ein gesondertes, rückwärtiges Zylinderteil mit geringerem Durchmesser und geringerer lichter Weite in ein gesondertes vorderes Zylinderteil größeren Durchmessers und größerer lichter Weite teleskopartig eintaucht. Infolgedessen ist die Aufgabe der Erfindung prinzipiell nicht lösbar, weil die Fuge zwischen den beiden Zylinderteilen in jeder Phase der Einspritzung in den Hochdruckraum mündet. Das vordere Zylinderteil kann demzufolge den Hochdruckraum auch bei maximaler rückwärtiger Ausgangslage der Förderschnecke im Sinne der Erfindung nicht einschließen, gemäß welcher diese Fuge in jedem Falle in den Niederdruckraum mündet. Zudem sind bei der bekannten Einrichtung auch die übrigen Merkmale des Kennzeichens des Anspruches 1 nicht verwirklicht.

Bei einer weiteren Ausgestaltung der Plastifiziereinrichtung nach Anspruch 2 ist der axiale Anpreßdruck zwischen Zylinderkopf und Zylinderteil durch eine Vielzahl auf einer Kreislinie angeordneter Gewindeelemente bewirkt. Durch eine solche Verteilung des Anpreßdruckes auf zahlreiche druckerzeugende Elemente ergibt sich bei der Montage bzw. für das Service-Personal die Möglichkeit, den Zylinderkopf unter Einsatz von relativ geringen physischen Kräften unter Verwendung von relativ einfachem Werkzeug vom Zylinderteil zu trennen bzw. den Zylinderkopf auszuwechseln.

Bei einer Ausbildung entsprechend Anspruch 3 (Ausführungsbeispiel der Figuren 1 bis 10) besteht (im Gegensatz zum Ausführungsbeispiel der Figuren 11,12) die Möglichkeit, für spezielle Spritzverfahren bedarfsweise Zylinderköpfe unterschiedlicher Länge einzusetzen. Ein extrem langer Zylinderkopf wird z.B. benötigt für ein spezielles Spritzverfahren, bei dem ein eingefärbtes Kunststoffmaterial vor Einspritzung mittels einer Mischeinrichtung intensiv durchgemischt werden muß. In diesem Fall ist eine mit der Förderschnecke verbundene Mischeinrichtung an der Rückseite der Rückstromsperre angeordnet.

Aus Gründen der Kostensenkung kann es zweckmäßig sein, entsprechend den Ansprüchen 4 bis 6, den vorderen Teil des in diesem Bereich vielfach extremen mechanischen und thermischen Beanspruchungen ausgesetzten Zylinderkopfes als ein gesondertes, höher legiertes Düsenteil auszubilden, ohne die Dichtheit des Hochdruckraumes nennenswert zu beeinträchtigen. Eine wesentliche Entschärfung des Problems der Abdichtung des Hochdruckraumes ergibt sich in diesem Falle nämlich dadurch, daß die Fuge zwischen dem Düsenkörper und dem Restteil des Zylinderkopfes im Bereich des Einspritzkanals verläuft und die Kreislinie, über welche die Fuge zwischen Düsenkörper und Rest-Zylinderkopf in den Hochdruckraum mündet, außerordentlich kurz ist. Insofern ist es auch möglich, die axiale Länge des Düsenkörpers sehr gering zu bemessen, indem dieser über eine plane, senkrecht zur Spritzachse verlaufende Dichtfläche am Rest-Zylinderkopf anliegt. Dank der extremen Kürze des Einspritzkanals kann auch dessen lichte Weite geringer bemessen werden, ohne daß dadurch ein wesentlicher Druckverlust beim Einspritzen auftritt. Bei geringerer lichter Weite des Einspritzkanals ergibt sich zudem der Vorteil, daß eine Düsennadel von entsprechend geringem Durchmesser eingesetzt werden kann, die mit wesentlich geringerer Kraft steuerbar ist.

Bei einer Ausgestaltung nach den Ansprüchen 7 bis 9 ergibt sich der Vorteil, daß der Zylinderkopf von wesentlich geringerer Masse ist und daher beim Wechsel leichter gehandhabt werden kann.

Zweckmäßigerweise sind entsprechend dem Anspruch 10 die feinbearbeiteten Stirnflächen von Zylinderkopf und Zylinderteil auf einen ringförmigen, an den Niederdruckraum angrenzenden Teilbereich der in einer vertikalen Ebene liegenden Fuge beschränkt. Durch die Minimierung der Anpreßfläche ergibt sich ein extrem hoher Anpreßdruck und eine entsprechend hohe Dichtheit.

Nachstehend wird die Erfindung anhand der Zeichnung an einem Ausführungsbeispiel erläutert.

Es zeigen:

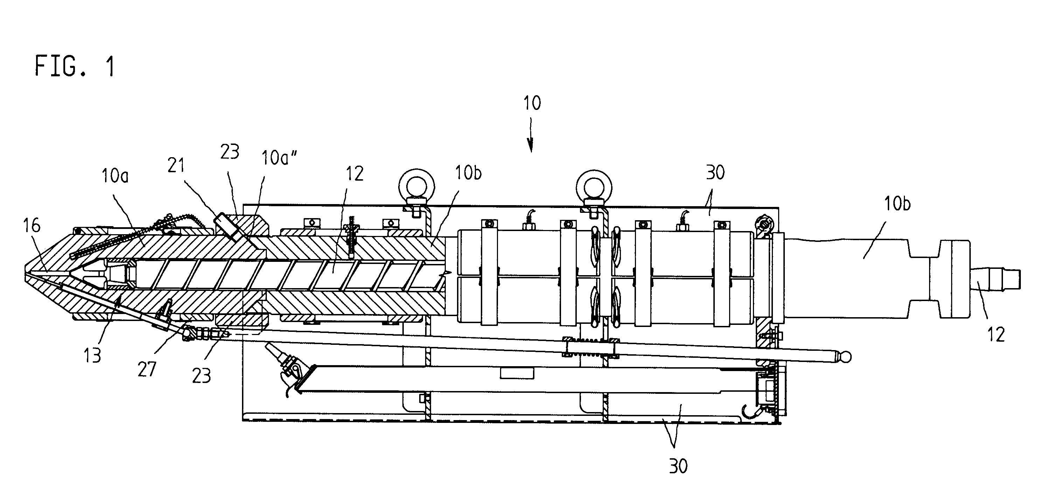

Fig. 1    Den teilweise aufgeschnittenen Plastifizierzylinder in Seitenansicht,

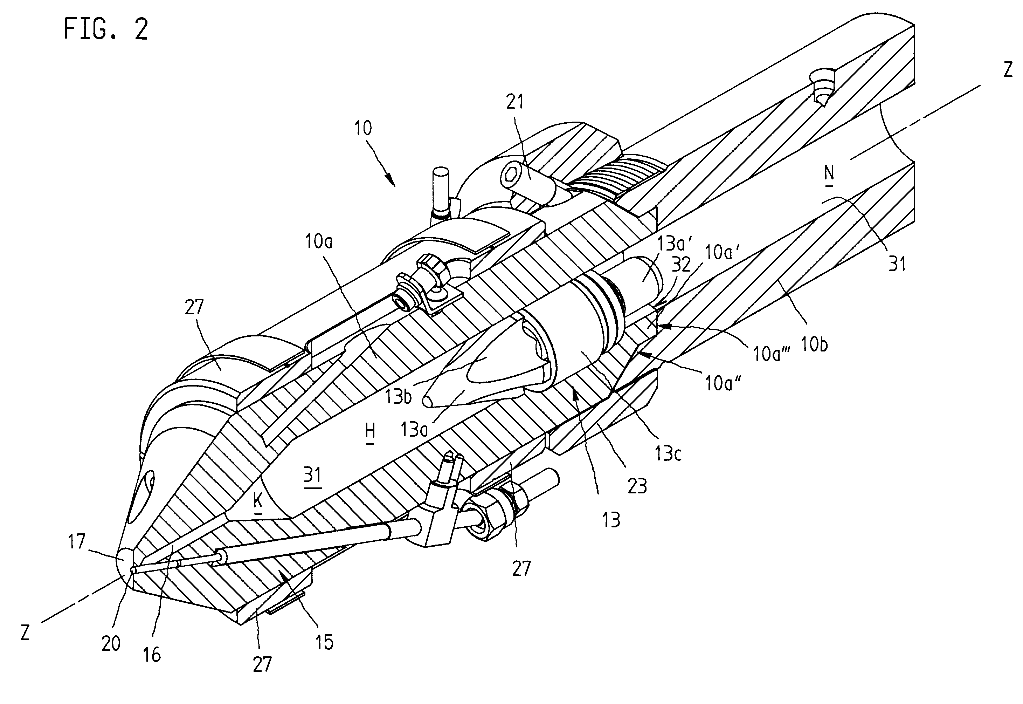

Fig. 2    einen Ausschnitt aus Fig. 1 in perspektivischer und vergrößerter Darstellung,

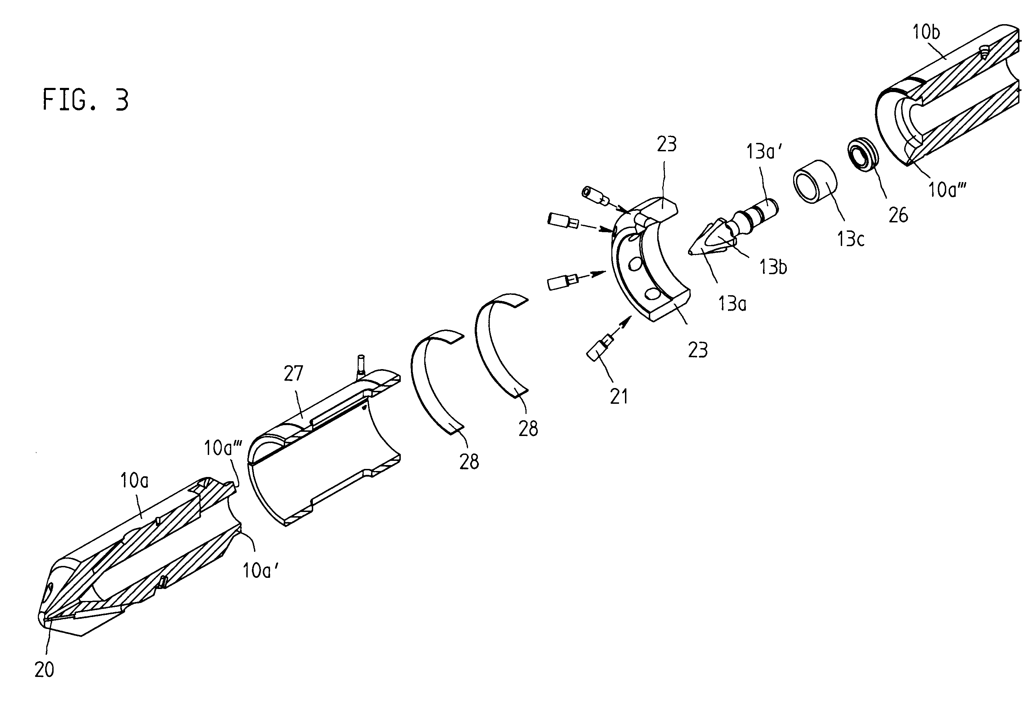

Fig. 3    den Ausschnitt gemäß Fig. 2 in Explosionsdarstellung, verkleinert,

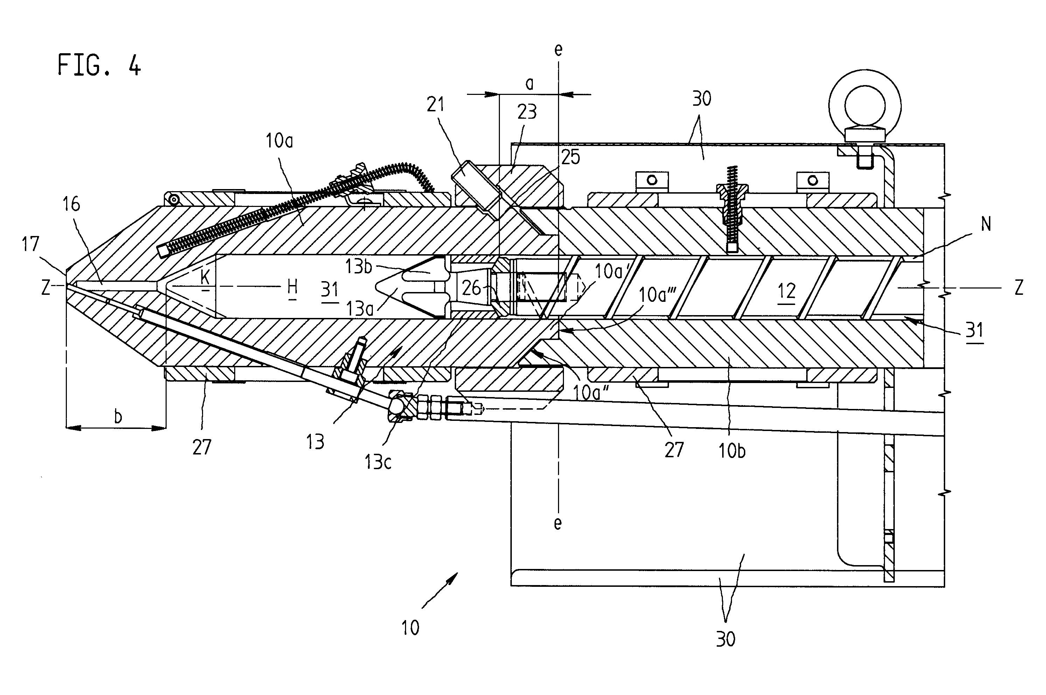

Fig. 4    einen Ausschnitt aus Fig. 1 in vergrößerter Darstellung,

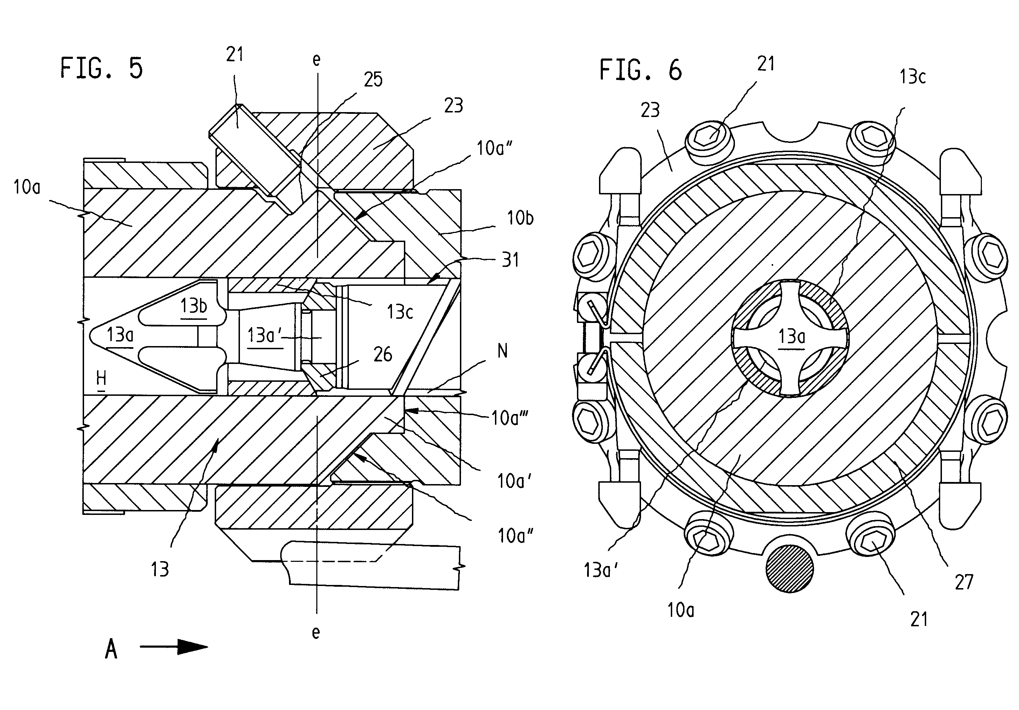

Fig. 5    einen Ausschnitt aus Fig. 4 in vergrößerter Darstellung,

Fig. 6    die Anordnung gemäß Fig. 5 in einer Ansicht aus Richtung A,

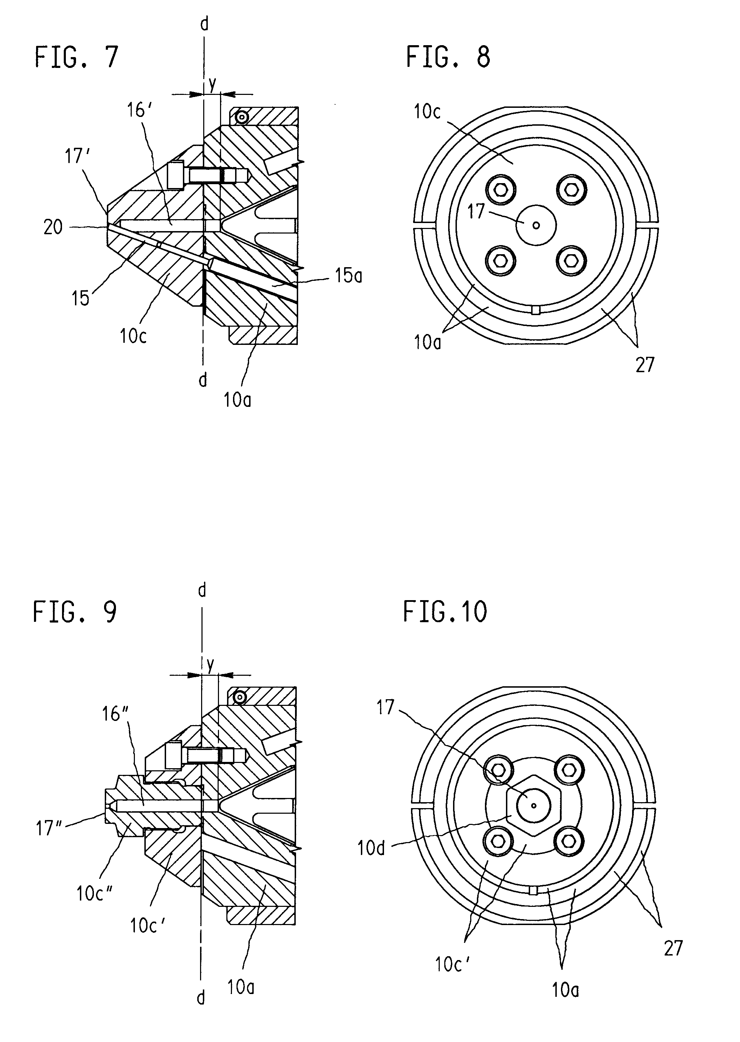

Fig. 7    eine mit Düsenkörper versehene Variante des Zylinderkopfes, dargestellt an dessen vertikal geschnittenem Endabschnitt,

Fig. 8    die Variante gemäß Fig. 7 in Stirnansicht,

Fig. 9    eine weitere mit Düsenkörper versehene Variante des Zylinderkopfes dargestellt an dessen vertikal geschnittenem Endabschnitt,

Fig. 10   die Variante gemäß Fig. 9 in Stirnansicht,

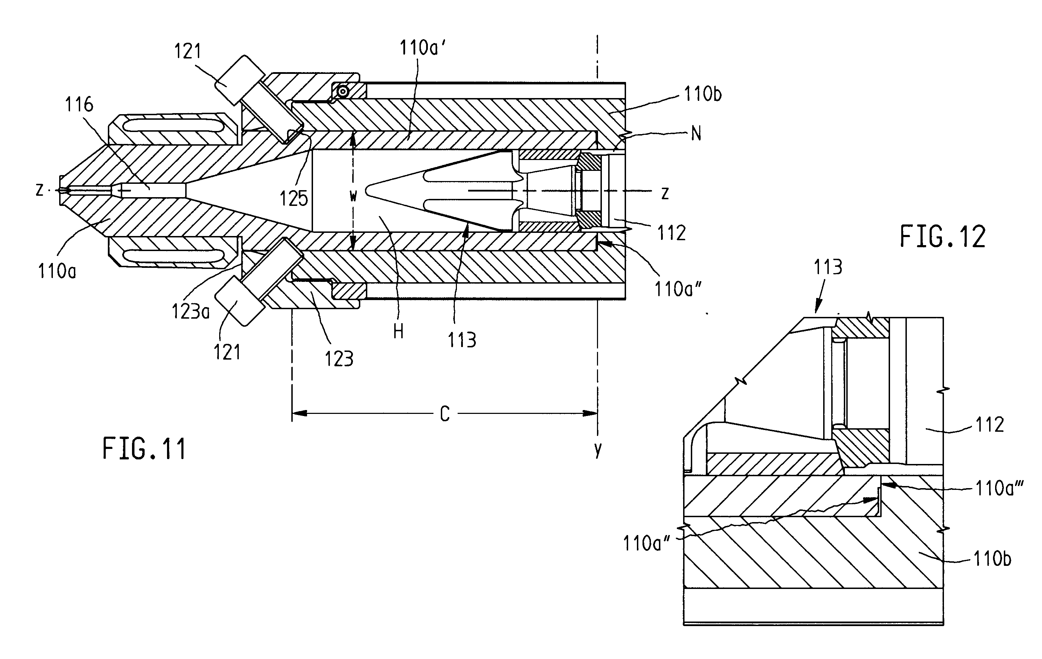

Fig. 11,12   eine Variante der Plastifiziereinrichtung in einer der Figur 4 entsprechenden Darstellung.

Im zylindrischen Plastifizierraum des beheizbaren Plastifizierzylinders 10 ist eine rotierbare Förderschnecke 12 aufgenommen. Diese transportiert den plastifizierten Kunststoff in einen Raum vor der in der Plastifizierphase zurückweichenden Förderschnecke 12. Nach der Plastifizierphase wird der vor der Förderschnecke 12 angesammelte plastifizierte Kunststoff durch einen axialen Hub der Förderschnecke 12 über einen Einspritzkanal 16 in die Spritzgießform eingespritzt. Eine bei Beginn dieses Hubes wirksam werdende Rückstromsperre 13 schließt einen sich beim Hub stetig verkleinernden Hochdruckraum H gegenüber einem die Förderschnecke 12 enthaltenden Niederdruckraum N ab. Der Plastifizierzylinder 10 ist aus einem Zylinderkopf 10a und einem Zylinderteil 10b leicht lösbar zusammengefügt. Das Zylinderteil 10b umschließt die Förderschnecke 12 in ihrer maximalen rückwärtigen Ausgangslage vollständig. Der Zylinderkopf 10a schließt den Hochdruckraum H sowie die Rückstromsperre 13 stets und vollständig ein. Dies gilt also insbesondere auch bei maximaler rückwärtiger Ausgangslage der Förderschnecke 12, bei welcher der Hochdruckraum sein größtmögliches Fassungsvermögen aufweist. Bei maximaler rückwärtiger Ausgangslage der Förderschnecke 12 übergreift der Zylinderkopf 10a zudem einen vorderen Abschnitt a (Fig. 4) der Förderschnecke 12 axial. Dabei sind der Zylinderkopf 10a mit seinem fein geschliffenen Achsialflansch 10a' und das Zylinderteil 10b mit seinem entsprechenden, fein geschliffenen Negativprofil mittels einer aus einer Muffe 23 und Gewindebolzen 21 bestehenden Preßeinrichtung axial aneinandergepreßt. Im übrigen grenzt der Zylinderkopf mit einer zur Zylinderachse z-z geneigten Schulter an das Zylinderteil 10b im Bereich einer Fuge 10a'' an. Zylinderkopf 10a und Zylinderteil 10b sind je von einer Muffe 23 partiell übergriffen. Diese ist einerseits am Zylinderkopf 10a axial abgestützt und andererseits mit dem Zylinderteil 10b verschraubt. Die axiale Abstützung der Muffe erfolgt mittels auf einer Kreislinie angeordneter, zur Zylinderachse z-z geneigter Gewindebolzen 21. Diese sind in Gewindebohrungen der Muffe 23 aufgenommen und liegen an Stützflächen 25 des Zylinderkopfes 10a an. In dem das Zylinderteil 10b übergreifenden Abschnitt der Muffe 23 steht diese mittels eines Innengewindes mit einem Außengewinde des Zylinderteiles 10b im Eingriff. Zylinderkopf 10a und Zylinderteil 10b sind daher dadurch axial miteinander verspannbar, daß die Gewindebolzen 21 entsprechend angezogen werden.

Im Ausführungsbeispiel der Fign. 1 bis 4 weist der einstückige Zylinderkopf 10a einen rückwärtigen zylindrischen Abschnitt und einen vorderen kegelstumpfförmigen, mit Anlagefläche 17 versehenen Abschnitt b (Fig. 4) auf. Im letzteren ist der Einspritzkanal 16 angeordnet.

In den Ausführungsbeispielen der Figuren 7,8 und 9,10 liegt am Zylinderkopf 10a stirnseitig ein mit Anlagefläche 17' bzw. 17'' und mit Einspritzkanal 16' bzw. 16'' versehener kegelstumpfförmiger Düsenkörper 10c bzw. 10c' über eine feingeschliffene Dichtfläche an. Diese Dichtfläche liegt in einer senkrecht zur Zylinderachse z-z verlaufenden Ebene d-d. Der Hochdruckraum H mündet im Abstand y (Fig. 7,9) von der Ebene d-d in den Einspritzkanal 16 ein. Der Abstand y entspricht etwa der lichten Weite des Einspritzkanals 16' bzw. 16''. Der im Abstand von der Anlagefläche 17 bzw. 17' endende Einspritzkanal 16 bzw. 16' ist von einer in der Anlagefläche 17 bzw. 17' mündenden schrägen Düsennadelbohrung 20 geringerer lichter Weite angeschnitten.

In der Variante gemäß den Fign. 9,10 weist der Düsenkörper 10c' ein gesondertes, zentrales Düsenteil 10c'' auf. Dieses bildet die Anlagefläche 17'' und liegt mit einer fein geschliffenen Dichtfläche in der Ebene d-d an einer entsprechenden Dichtfläche des Zylinderkopfes 10a an. Wie insbesondere aus den Fign. 2,4 ersichtlich, verläuft bei maximaler rückwärtiger Ausgangslage der Förderschnecke 12 eine vertikale Symmetrieebene e-e (Fig. 5) der Muffe 23 im Grenzbereich zwischen dem Niederdruckraum N und dem Hochdruckraum H.

Im Ausführungsbeispiel der Fig. 11,12 weit der Zylinderkopf 110a einen geringeren Durchmesser auf als das Zylinderteil 110b. Der Zylinderkopf 110a ist von einem Abschnitt c des Zylinderteils 110b größerer lichter Weite w axial übergriffen. Der Abschnitt c erstreckt sich bei maximaler rückwärtiger Ausgangslage der Förderschnecke 112 bis in den vorderen Bereich des Hochdruckraums H. Auch bei in vorderster Position befindlicher Förderschnecke 112 endet der Abschnitt c größerer lichter Weite im Bereich des Hochdruckraumes H. Der Zylinderkopf 110a und das Zylinderteil 110b sind von einer Muffe 123 je partiell übergriffen. Die als Gewindemuffe ausgebildete Muffe 123 steht mit einem Außengewinde des Zylinderteils 110b im Eingriff. Der Zylinderkopf 110a ist mittels Gewindebolzen 121 axial gegen das Zylinderteil 110b preßbar. Die Gewindebolzen 121 sind an Innengewinden der Muffe 123 axial abgestützt. Stirnseitig greifen sie an Preßflächen 125 des Zylinderkopfes 110a an. Die Gewindebolzen 121 sind auf einer Kreislinie angeordnet und durchsetzen einen Innenflansch 123a der Muffe 123. Sie schließen darüber hinaus zur Zylinderachse z-z einen Winkel von etwa 45° ein. Die axial aufeinanderliegenden Stirnflächen von Zylinderkopf 110a und Zylinderteil 110b sind nur in einem kleinen ringförmigen, an den Niederdruckraum N angrenzenden Bereich (Stirnflächen 10a''') der Fuge 110a'' feinbearbeitet. Entsprechend hoch ist der spezifische Anpreßdruck in diesem Bereich.

**Patentansprüche**

1. Plastifiziereinrichtung an einer Kunststoff-Spritzgießmaschine mit einem Plastifizierzylinder (10), dessen innere Mantelfläche einen zylindrischen Plastifizierraum (31) begrenzt, welcher über eine kegelförmigen Abschnitt (k) in den zentralen Einspritzkanal (16) mündet,
mit einer rotierbaren Förderschnecke (12) im Plastifizierraum (31), welche den plastifizierten Kunststoff in einen Abschnitt des Plastifizierraumes (31) vor die zurückweichende Förderschnecke (12) transportiert und durch einen axialen Einspritzhub in die Spritzgießform einspritzt,
und mit einer bei diesem Einspritzhub wirksamen, am vorderen Ende der Förderschnecke (12) angeordneten Rückstromsperre (13), die einen sich beim Einspritzhub stetig verkleinernden Hochdruckraum (H) gegenüber einem sich entsprechend vergrößernden, die Förderschnecke (12) enthaltenen Niederdruckraum (N) abschließt,
dadurch gekennzeichnet, daß der Plastifizierzylinder (10) aus einem den Hochdruckraum (H) und die Rückstromsperre (13) auch bei maximaler rückwärtiger Ausgangslage der Förderschnecke (12) stets und vollständig einschließenden Zylinderkopf (10a) und einem den Niederdruckraum (N) und die Förderschnecke (12) umschließenden Zylinderteil (10b) leicht lösbar zusammengefügt ist und die Fuge (10a'') entlang einer Kreislinie (32 in Fig. 2) an der inneren Mantelfläche des Plastifizierraums (31) in den Niederdruckraum (N) mündet, wobei feinbearbeitete Stirnflächen (10a''') von Zylinderkopf (10a) und Zylinderteil (10b) mittels einer Preßeinrichtung (Muffe 23; Gewindebolzen 21) axial aufeinander preßbar sind.

2. Plastifizierzylinder nach Anspruch 1, dadurch gekennzeichnet, daß der Zylinderkopf (10a) und das Zylinderteil (10b) von einer Muffe (23) je partiell übergriffen sind, welche am vorderen Ende des Zylinderteils (10b) befestigt ist, und daß der Zylinderkopf (10a) mittels Gewindebolzen (21) axial gegen das Zylinderteil (10b) preßbar ist, welche Gewindebolzen (21) an Innengewinden der Muffe (23) axial abgestützt sind und stirnseitig an Preßflächen angreifen.

3. Plastifiziereinrichtung nach Anspruch 1 oder 2, dadurch gekennzeichnet, daß bei maximaler rückwärtiger Ausgangslage der Förderschnecke (12) die mit dem Zylinderteil (10b) verschraubte Muffe (23) im Grenzbereich zwischen dem Niederdruckraum (N) und dem Hochdruckraum (H) liegt, wobei Zylinderkopf (10a) und Zylinderteil (10b) gleichen Außendurchmesser aufweisen (Ausführungsbeispiel der Figuren 1-10).

4. Plastifiziereinrichtung nach einem der Ansprüche 1 bis 3, dadurch gekennzeichnet, daß am Zylinderkopf (10a) ein mit Anlagefläche (17',17'') und mit Einspritzkanal (16',16'') versehener kegelstumpfförmiger Düsenkörper (10c;10c') über eine feingeschliffene Dichtfläche in einer vertikalen Ebene (d-d) anliegt, wobei der Hochdruckraum (H) im Abstand (y in Fig. 7,9) von der Ebene (d-d) in den Einspritzkanal (16) einmündet (Fig. 7,8; 9,10).

5. Plastifiziereinrichtung nach Anspruch 4, dadurch gekennzeichnet, daß der Abstand (y) etwa der lichten Weite des Einspritzkanals (16',16'') entspricht.

6. Plastifiziereinrichtung nach Anspruch 4 oder 5, dadurch gekennzeichnet, daß der Düsenkörper (10c') ein gesondertes, zentrales Düsenteil (10c'') aufweist, das die Anlagefläche (17'') bildet und mit einer feingeschliffenen Dichtfläche in der Ebene (d-d) an einer entsprechenden Dichtfläche des Zylinderkopfes (10a) anliegt (Fig. 9,10).

7. Plastifiziereinrichtung nach Anspruch 1 oder 2, dadurch gekennzeichnet, daß der Zylinderkopf (110a) einen geringeren Durchmesser aufweist als das Zylinderteil (110b) und von einem Abschnitt (c) des Zylinderteils (110b) größerer lichter Weite (w) axial übergriffen ist, welcher Abschnitt (c) sich bei maximaler rückwärtiger Ausgangslage der Förderschnecke (112) bis in den vorderen Bereich des Hochdruckraumes (H) erstreckt (Ausführungsbeispiel der Figur 11).

8. Plastifiziereinrichtung nach Anspruch 7, dadurch gekennzeichnet, daß der Abschnitt (c) größerer lichter Weite (w) des Zylinderteils (110b') im Bereich des kegelförmigen Abschnittes (k) des Plastifizierraumes (131) endet, über welchen Abschnitt (k) der Zylinderraum (131) in den Einspritzkanal (116) mündet.

9. Plastifiziereinrichtung nach einem der Ansprüche 2,7 oder 8, dadurch gekennzeichnet, daß die Gewindebolzen (121) an Innengewinden eines Innenflansches (123a) der Muffe (123) axial abgestützt sind.

10. Plastifiziereinrichtung nach einem der Ansprüche 1,2 bis 9, dadurch gekennzeichnet, daß die feinbearbeiteten Stirnflächen von Zylinderkopf (110a) und Zylinderteil (110b) auf auf einen ringförmigen, an den Niederdruckraum (N) angrenzenden Teilbereich (Stirnflächen 10a''') der in einer vertikalen Ebene liegenden Fuge (110a'') beschränkt sind.

FIG. 1

FIG. 2

EP 0 483 541 A2

FIG. 3

EP 0 483 541 A2

FIG. 4

FIG. 6

FIG. 5

FIG. 7

FIG. 8

FIG. 9

FIG.10

FIG.11

FIG.12

EP 0 483 541 A2